Europäisches Patentamt

European Patent Office

Office européen des brevets

(19)

(11) Publication number: **0 318 268**
**A2**

# EUROPEAN PATENT APPLICATION

(12)

(21) Application number: **88311085.0**

(22) Date of filing: **23.11.88**

(51) Int. Cl.⁴: **G 01 B 13/24**

(30) Priority: **25.11.87 GB 8727600**

(43) Date of publication of application:
**31.05.89 Bulletin 89/22**

(84) Designated Contracting States:
**DE ES FR GB IT NL SE**

(71) Applicant: **HEEREMA ENGINEERING SERVICE B.V.**
**47 Vondellaan**
**NL-2332 AA Leiden (NL)**

(72) Inventor: **Van Ketel, Hendrik**
**Elzendal 85**
**NL-3142 AD Maassluis (NL)**

(74) Representative: **Mayes, Stuart David et al**
**BOULT, WADE & TENNANT 27 Furnival Street**
**London, EC4A 1PQ (GB)**

(54) **Deflection measurement.**

(57) A deflection measurement system uses a member (10), eg a tube, containing a head of liquid (11), eg water, which is connected at points (a, b, c, d, e) to a body (12) whose deflection is to be monitored. Pressure sensing means P, eg pressure gauges or transducers, measure the head of liquid at each point and the relative changes of head measurements occurring upon relative movement of the points and hence the member give a measure of the deflection of the body.

FIG. 1

## Description

### DEFLECTION MEASUREMENT

This invention relates to measurement of deflection of bodies in water.

Bodies in water can be subject to forces which tend to cause them to deflect, for example, in consequence of loads being placed upon the body or as a result of wave action acting on the body. In offshore construction work these days, often very large bodies are present in the water. These bodies may be, for example, vessels such as semi-submersible barges or structures such as platform jackets. It is important to be able to keep. the deflections of such bodies within tolerable limits and thus their deflections need to be measured.

Various systems are known for making measurements of movements of points from a datum level, but these are restricted to applications on land, eg, to monitor subsidence or settlement of foundations. Also known are various systems for monitoring the trim of a vessel, but these are concerned with whether or not the vessel is level rather than with deflections of the vessel.

The present invention recognises the need to be able to make measurements of the deflections of a body in water, and in consequence of this, the invention provides a method of measurement of relative deflection of at least two horizontally spaced points of a body in water, eg, a vessel such as a barge or a structure such as a platform jacket, which method comprises connecting to each said point of the body a member containing a head of liquid, providing means to measure the head which is positioned and arranged so that movement of the point and hence the member will provide a change of head measurement, and comparing the head measurement changes at the said points.

Measurement of the head may be by pressure sensing eg, pressure gauge or pressure transducer, or by liquid level sensing, eg, using sound, optical or laser device.

Separate members may be used and each connected to a respective point, in which case measurement of the head for each point may be made at a common point. Alternatively, a single member may be used and connected to each point, in which case measurement of the head for each point is made locally at the respective points.

The invention also provides a system for measurement of relative deflection of at least two horizontally spaced points of a body in water, comprising means connecting to each point a member containing a head of liquid, means to measure the head, said head measuring means being positioned and arranged so that movement of the point and hence the member will provide a change of head measurement, and means for comparing the head measurement changes at the said points.

The body may be a vessel, eg a barge, and be floating or semi-submersible, or a submersible structure such as a platform jacket. The system may be incorporated integrally with the body itself or be mountable thereon.

The invention further provides a vessel incorporating a deflection measurement system as herein described.

By way of example, some embodiments of the invention will now be described with reference to the accompanying drawings, in which:

Figure 1 illustrates one form of deflection measurement system in accordance with the invention,

Figures 2, 3 and 4 illustrate alternative systems, and

Figure 5 illustrates use of a deflection measurement system on a vessel.

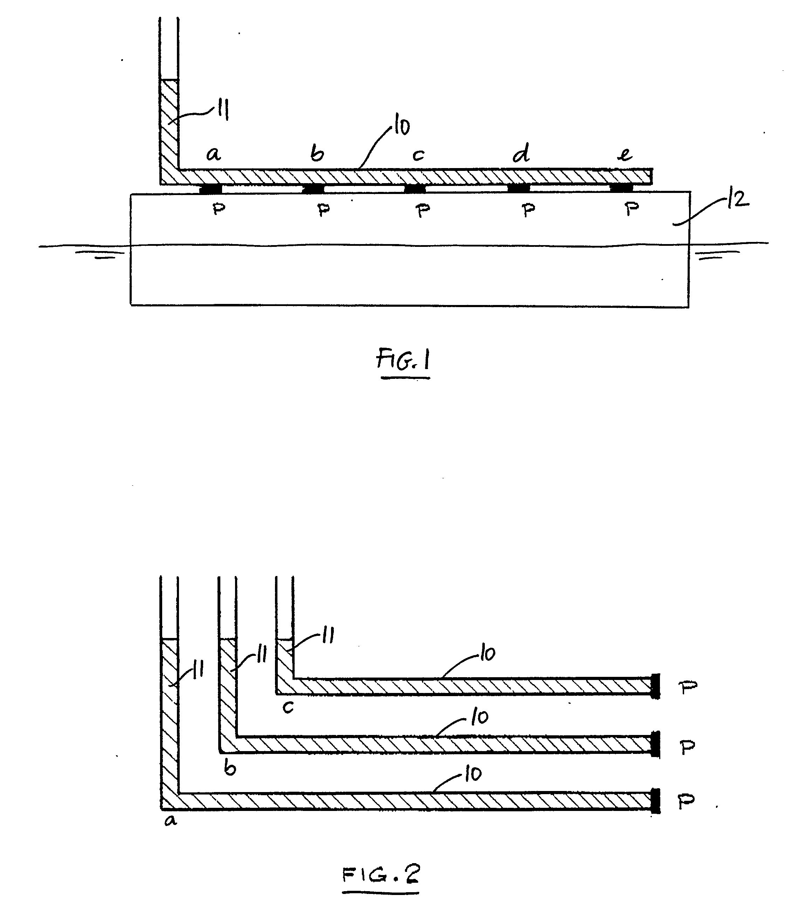

The form of deflection measurement system which is seen in Figure 1 comprises a member 10, eg a tube with an open end, which contains a head of liquid 11, eg water. The member 10 is connected at points a, b, c, d, e to a body 12 whose deflections are to be monitored. Pressure sensing means P, eg pressure gauges or pressure transducers, are positioned at each of the points a, b, c, d, e to measure the head of liquid at these points. Relative movements between the points a, b, c, d, e of the body 12, and hence the member 10, will provide relative changes of head measurements at these points and this is a measure of the relative displacements of the points. The deflection of the body can thus be deduced by comparing the head measurement changes at the points and using a suitable information processing system, eg, computer.

In the system which is seen in Figure 2, separate members 10, each with a head of liquid 11, are used, each being connected to a point a, b, c, on the body. The pressure sensing means P for the members are positioned at a common point of measurement. Here, relative displacements of the points a, b, c can be deduced from the differences in the heads of liquid measured in each member. Instead of measuring the head using pressure sensing means, it would be possible to measure the relative levels of the liquid in the members. Such liquid level sensing means could operate using, for example, sound, optical or laser devices.

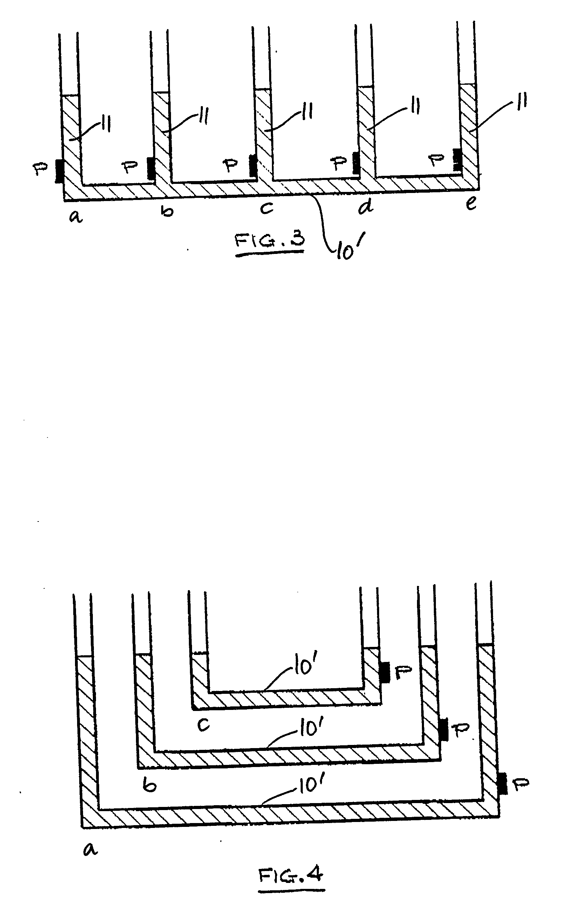

The system which is seen in Figure 3 uses a single member 10', eg, a tube with both ends open, which again is connected to the body at points a, b, c, d, e. Here, however, the member 10' additionally provides a column of liquid 11 at each of the points. Pressure sensing means P may be arranged to measure the head of liquid at the various points. Alternatively, level sensing means may be used to measure the height of the liquid in each column. Again, a suitable information processor, eg, computer, compares the head measurement changes at the points and deduces the deflection of the body.

In the system which is seen in Figure 4, a number of separate members 10', eg tubes with both ends open, are used and the difference in liquid levels are measured.

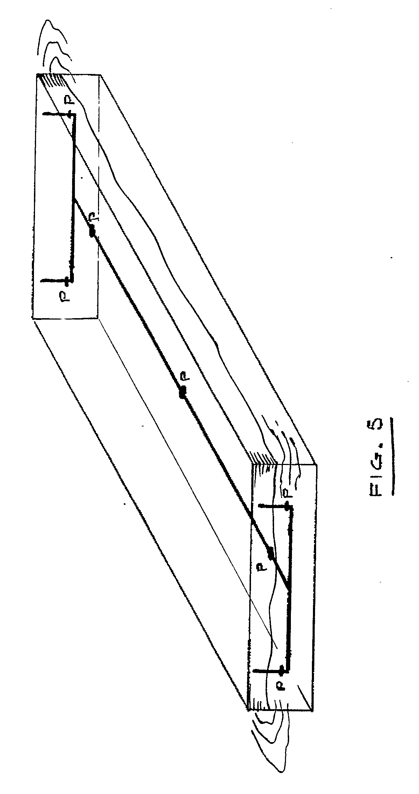

Figure 5 illustrates use of a deflection measurement system such as described above on a vessel, eg a cargo barge. The system has been extended to include two transverse branches in addition to the main system which runs longitudinally of the vessel, so that the effects of heel, trim and vessel torsion can also be measured.

The deflection measurement systems described above may also be used for ships in seaway, for example, tankers and the like or bridges or platform jackets or any other large structure in water whose stresses/deflections have to be monitored, eg, during loading/unloading.

## Claims

1. A method of measurement of relative deflection of at least two horizontally spaced points of a body in water, which method comprises connecting to each point a member containing a head of liquid, providing means to measure the head which is positioned and arranged so that movement of the point and hence the member will provide a change of head measurement, and comparing the head measurement changes at the said points.

2 A method as claimed in Claim 1 wherein measurement of the head is by pressure sensing.

3. A method as claimed in Claim 1 wherein measurement of the head is by liquid level sensing.

4. A method as claimed in Claim 1, Claim 2 or Claim 3 wherein separate members are used and each is connected respectively to a point, and measurement of the head for each point is made at a common point.

5. A method as claimed in Claim 1, Claim 2 or Claim 3 wherein a single member is used and connected to each point, and measurement of the head for each point is made locally at the respective points.

6. A system for measurement of relative deflection of at least two horizontally spaced points of a body in water, comprising means connecting to each point a member containing a head of liquid, means to measure the head, said head measuring means being positioned and arranged so that movement of the point and hence the member will provide a change of head measurement, and means for comparing the head measurement changes at the said points.

7. A system as claimed in Claim 6 wherein said means to measure the head comprises pressure sensing means.

8. A system as claimed in claim 6 wherein said means to measure the head comprises liquid level sensing means.

9. A system as claimed in claim 6, claim 7 or Claim 8 wherein there are separate members each connected to a respective point, and the means for measuring the heads at the points are positioned at a common point.

10. A system as claimed in Claim 6, Claim 7 or Claim 8 wherein there is a single member which is connected to each point, and the means for measuring the heads at the points are positioned locally at the respective points.

FIG.1

FIG.2

FIG.3

FIG.4

FIG. 5

EP 0 318 268 A2